# EUROPÄISCHE PATENTANMELDUNG

(11) **EP 1 274 036 A2**
(43) Veröffentlichungstag der Anmeldung: **08.01.2003**
(21) Anmeldenummer: 02100700.0
(22) Anmeldetag: 13.06.2002
(51) Int. Cl.: G06F 17/60, H04L 29/06

(54) **Anordnung und Verfahren zur Übertragung von Daten in Abhängigkeit eines Übertragungspreises**

(30) Priorität: 03.07.2001 DE 10132044
(71) Anmelder: SIEMENS AKTIENGESELLSCHAFT, 80333 München (DE)
(72) Erfinder: Grimminger, Jochen, 80638, München (DE)

(57) **Zusammenfassung**

Die Erfindung betrifft Anordnungen, ein Verfahren und ein Programmprodukt zur Übertragung von Daten, bei denen zu den zu übertragenden Daten ein Übertragungspreis übertragen wird.

Demnach weist eine Kundenanordnung zur Übertragung von Daten für einen Kunden von und/oder zu einer Anbieteranordnung Mittel zur Übertragung eines Übertragungsangebots für die jeweils aktuell zu übertragenden Daten auf. Das Übertragungsangebot beinhaltet einen Übertragungspreis.

Eine Anbieteranordnung zur Übertragung von Daten für einen Kunden von und/oder zu einer Kundenanordnung weist Mittel zur Übertragung eines Übertragungsangebotes für die jeweils aktuell zu übertragenden Daten auf. Das Übertragungsangebot beinhaltet einen Übertragungspreis.

Somit wird zu den zu übertragenden Daten ein Übertragungspreis übertragen. Durch die Übertragung eines Übertragungspreises für die jeweils zu übertragenden Daten wird die Preisgestaltung sowohl für den Kunden als auch für den Anbieter wesentlich flexibler und aktueller, wodurch die eingangs erwähnten Probleme überwunden werden. Insbesondere wird es dadurch möglich, einen Übertragungspreis auszuhandeln oder Übertragungsleistungen bzw. zu übertragende Daten in Form von Auktionen zu versteigern.

## Beschreibung

Die Erfindung betrifft Anordnungen, ein Verfahren und ein Programmprodukt zur Übertragung von Daten.

In zukünftigen Kommunikationsnetzen wird die Möglichkeit bestehen, die Art und Qualität einer Kommunikationsverbindung zu bestimmen. Ebenso wird es möglich sein, die unterschiedlichsten Telekommunikationsanbieter nach verschiedenen Kriterien auszuwählen.

Aus dem Stand der Technik sind Router zum Einsatz beim Endkunden bekannt, die je nach Zeit und möglicher Dauer einer aufzubauenden Telefonverbindung den jeweils günstigsten Telefonanbieter auswählen. Zu diesem Zweck sind in dem Router Tariftabellen gespeichert, die bei Bedarf durch Herunterladen neuer Tariftabellen aktualisiert werden können.

Hierdurch ergeben sich sowohl beim Kunden als auch beim Anbieter technische Probleme. Der Kunde hat das Problem, dass er die Tarifdaten entweder durch Handeingabe oder durch Herunterladen manuell aktualisieren muss. Dieser Vorgang soll dem Benutzer abgenommen werden, indem ihm geeignete technische Mittel zur Verfügung gestellt werden.

Der Telekommunikationsanbieter hat das Problem, dass seine Netze aufgrund nicht aktueller oder zu allgemein gehaltener Preisinformationen nicht optimal ausgelastet werden. Es kommt zu unnötigen Belastungsspitzen, die zusätzliche Hardwareinvestitionen erforderlich machen.

Diese Probleme werden durch Anordnungen, ein Verfahren und ein Programmprodukt mit den Merkmalen der unabhängigen Ansprüche gelöst.

Demnach weist eine Kundenanordnung zur Übertragung von Daten für einen Kunden von und/oder zu einer Anbieteranordnung Mittel zur Übertragung eines Übertragungsangebots für die jeweils aktuell zu übertragenden Daten auf. Das Übertragungsangebot beinhaltet einen Übertragungspreis.

Eine Anbieteranordnung zur Übertragung von Daten für einen Kunden von und/oder zu einer Kundenanordnung weist Mittel zur Übertragung eines Übertragungsangebotes für die jeweils aktuell zu übertragenden Daten auf. Das Übertragungsangebot beinhaltet einen Übertragungspreis.

Die Begriffe Kundenanordnung und Anbieteranordnung müssen nicht beinhalten, dass der Kunde bzw. Anbieter Besitzer oder Eigentümer der jeweiligen Anordnung ist. Vielmehr reicht es, wenn die Anordnung für die Zwecke des Kunden bzw. des Anbieters genutzt wird.

Der Kunde ist ein Kunde für die Übertragung von Daten und der Anbieter ist ein Anbieter für die Übertragung von Daten.

Die Übertragung des Übertragungsangebotes kann von der Kundenanordnung zur Anbieteranordnung oder von der Anbieteranordnung zur Kundenanordnung erfolgen.

Somit wird zu den zu übertragenden Daten ein Übertragungspreis übertragen. Durch die Übertragung eines Übertragungspreises für die jeweils zu übertragenden Daten wird die Preisgestaltung sowohl für den Kunden als auch für den Anbieter wesentlich flexibler und aktueller, wodurch die eingangs erwähnten Probleme überwunden werden. Insbesondere wird es dadurch möglich, einen Übertragungspreis auszuhandeln oder Übertragungsleistungen bzw. zu übertragende Daten in Form von Auktionen zu versteigern.

Dazu weist die Anordnung insbesondere Mittel zur Übertragung einer Übertragungsannahme auf, durch die ein zuvor empfangenes Übertragungsangebot angenommen werden kann.

Um einen Preisvergleich durchführen zu können, kann die Anordnung Mittel zur Einholung mehrerer Übertragungsangebote sowie Mittel zum Vergleich der zu diesen Übertragungsangeboten gehörigen Übertragungspreise aufweisen.

Insbesondere für Auktionen ist es sinnvoll, wenn die Anordnung Mittel zur Berechnung eines neuen Übertragungsangebotes aufgrund eines empfangenen Übertragungsangebotes aufweist.

Der Übertragungspreis ist in der Anordnung eingestellt und insbesondere durch die Anordnung einstellbar. Das Einstellen des Übertragungspreises durch die Anordnung kann in Abhängigkeit von einem oder mehreren der Kriterien Übertragungsrate, Datenmenge, Übertragungsuhrzeit, Netzauslastung und/oder Übertragungsweg einstellbar sein.

Das Verfahren zur Übertragung von Daten zwischen einer Kundenanordnung und einer Anbieteranordnung wird so ausgeführt, dass von zumindest einer der Anordnungen ein Übertragungsangebot für die jeweils zu übertragenden Daten zur anderen Anordnung übertragen wird, wobei das Übertragungsangebot einen Übertragungspreis beinhaltet.

Vorzugsweise wird dieses Verfahren so weitergeführt, dass das Übertragungsangebot von der anderen Anordnung angenommen wird, wenn der angebotene Übertragungspreis unter einem vorgegebenen Grenzwert liegt.

Alternativ oder ergänzend kann der angebotene Übertragungspreis mit Übertragungspreisen anderer Anbieter bzw. Kunden verglichen werden.

Der Übertragungspreis wird durch zumindest eine der Anordnungen in Abhängigkeit von einem oder mehreren der Kriterien Übertragungsrate, Datenmenge, Übertragungsuhrzeit, Netzauslastung und/oder Übertragungsweg eingestellt.

Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Softwarecodeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Merkmale und Vorteile der Erfindung ergeben sich aus der Beschreibung eines Ausführungsbeispiels anhand der Zeichnung. Dabei zeigt

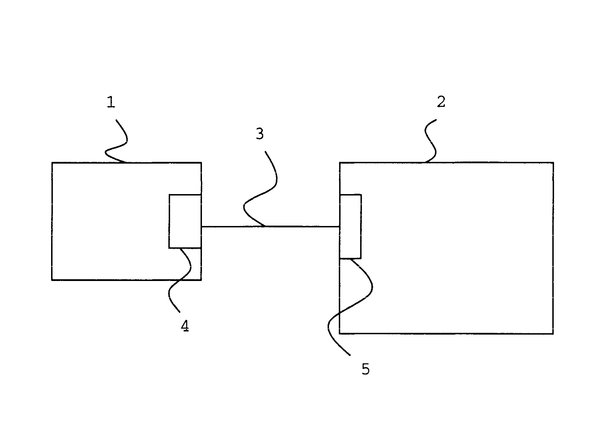

Figur 1 eine Anbieteranordnung und eine Kundenanordnung.

In Figur 1 erkennt man eine Kundenanordnung 1 und eine Anbieteranordnung 2. Die Kundenanordnung 1 ist mit der Anbieteranordnung 2 über ein Datenübertragungsmittel 3 verbunden. Das Datenübertragungsmittel 3 kann ein Kupfer-und/oder Glasfaserkabel und/oder auch eine Infrarot- und/oder Funkübertragungsstrecke sein.

Die Kundenanordnung weist Mittel 4 zur Übertragung eines Übertragungsangebotes für die jeweils zu übertragenden Daten auf, wobei das Übertragungsangebot einen Übertragungspreis beinhaltet. Der Übertragungspreis ist ein Übertragungspreis für die zu übertragenden Daten. Er ist eine finanzielle Belastung und nicht etwa der Preis in einer Kostenfunktionen, wie sie von unterschiedlichen Übertragungsalgorithmen zur Optimierung der Übertragungsleistung verwendet wird.

Ebenso weist die Anbieteranordnung 2 Mittel 5 zur Übertragung eines Übertragungsangebotes für die jeweils zu übertragenden Daten auf, wobei das Übertragungsangebot einen Übertragungspreis beinhaltet. Die Mittel 4, 5 zur Übertragung eines Übertragungsangebotes sind gleichzeitig Mittel zur Übertragung einer Übertragungsannahme, Mittel zur Einholung mehrerer Übertragungsangebote, Mittel zum Vergleich der zu den Übertragungsangeboten gehörigen Übertragungspreise und Mittel zur Berechnung eines neuen Übertragungsangebots aufgrund eines empfangenen Übertragungsangebotes. Die Mittel 4, 5 zum Übertragen eines Übertragungsangebotes können als Prozessor in Verbindung mit einem Speicher ausgebildet sein.

Im Speicher ist der Übertragungspreis gespeichert, der durch die jeweilige Anordnung 1, 2 in Abhängigkeit von einem oder mehreren der Kriterien Übertragungsrate, Datenmenge, Übertragungsuhrzeit, Netzauslastung und/oder Übertragungsweg eingestellt wird.

Bei einem Verfahren zur Datenübertragung von Daten zwischen der Kundenanordnung und der Anbieteranordnung 2 wird von zumindest einer der Anordnungen 1, 2 ein Übertragungsangebot für die jeweils zu übertragenden Daten zur anderen Anordnung 2, 1 übermittelt. Das Übertragungsangebot beinhaltet einen Übertragungspreis.

Allen Ausführungsformen der Erfindung ist gemeinsam, dass in der Kommunikation zwischen Kundenanordnung und Anbieteranordnung zusätzlich Preisinformationen übertragen werden, die einen Übertragungspreis beinhalten, der für den Kunden bzw. den Anbieter für eine Verbindung mit den jeweils gegebenen Charakteristiken akzeptabel ist. Die jeweils andere Anordnung kann dann entweder annehmen, ablehnen oder ein eigenes Übertragungsangebot unterbreiten. Es kommt zu Verhandlungen und es ergibt sich möglicherweise eine Auktion. Der Kunde hat damit die Möglichkeit, billigst zu kommunizieren, und der Anbieter kann versuchen, sein Netz möglichst optimal auszulasten und Kosten und Einnahmen genauer abzuwägen.

Im Rahmen der Erfindung wird die Kommunikation bzw. Übertragung zwischen der Kundenanordnung und der Anbieteranordnung ausgeweitet, wodurch dynamische Preismodelle eingesetzt werden können, bei denen die Möglichkeit besteht, zusätzliche Kriterien, wie zum Beispiel Übertragungsrate, Datenmenge, Übertragungsuhrzeit, Netzauslastung und/oder Übertragungsweg, mit in die Preisgestaltung einzubeziehen.

Die Kundenanordnung kann insbesondere auch als Endgerät in Form eines mobilen Kommunikationsgerätes (Mobiltelefon, persönlicher Organizer, Smartphone, tragbarer Computer) oder eines PCs realisiert sein. Die Anbieteranordnung kann insbesondere aus einem Netzwerk bestehen.

## Patentansprüche

1. Kundenanordnung zur Übertragung von Daten für einen Kunden von und/oder zu einer Anbieteranordnung (2),
**dadurch gekennzeichnet,**
**dass** die Kundenanordnung Mittel (4) zum Übertragen eines Übertragungsangebotes für die jeweils zu übertragenden Daten aufweist, wobei das Übertragungsangebot einen Übertragungspreis beinhaltet.

2. Anbieteranordnung zur Übertragung von Daten für einen Kunden von und/oder zu einer Kundenanordnung (1),
**dadurch gekennzeichnet,**
**dass** die Anbieteranordnung (2) Mittel (5) zum Übertragen eines Übertragungsangebotes für die jeweils zu übertragenden Daten aufweist, wobei das Übertragungsangebot einen Übertragungspreis beinhaltet.

3. Anordnung nach zumindest einem der vorhergehenden Ansprüche,
**dadurch gekennzeichnet,**
**dass** die Anordnung (1, 2) Mittel (4, 5) zur Übertragung einer Übertragungsannahme aufweist.

4. Anordnung nach zumindest einem der vorhergehenden Ansprüche,
**dadurch gekennzeichnet,**
**dass** die Anordnung (1, 2) Mittel (4, 5) zum Einholen mehrerer Übertragungsangebote aufweist und Mittel (4, 5) zum Vergleich der zu den Übertragungsangeboten gehörigen Übertragungspreise.

5. Anordnung nach zumindest einem der vorhergehenden Ansprüche,
**dadurch gekennzeichnet,**
**dass** die Anordnung (1, 2) Mittel (4, 5) zur Berechnung eines neuen Übertragungsangebotes aufgrund eines empfangenen Übertragungsangebotes aufweist.

6. Anordnung nach zumindest einem der vorhergehenden Ansprüche,
**dadurch gekennzeichnet,**
**dass** der Übertragungspreis in Abhängigkeit von einem oder mehreren der Kriterien Übertragungsrate, Datenmenge, Übertragungsuhrzeit, Netzauslastung und/oder Übertragungsweg einstellbar ist.

7. Verfahren zur Übertragung von Daten zwischen einer Kundenanordnung (1) und einer Anbieteranordnung (2),
bei dem zumindest von einer der Anordnungen (1, 2) ein Übertragungsangebot für die jeweils zu übertragenden Daten zur anderen Anordnung (2, 1) übermittelt wird, das einen Übertragungspreis beinhaltet.

8. Verfahren nach zumindest Anspruch 7,
bei dem das Übertragungsangebot von der andere Anordnung (2, 1) angenommen wird, wenn der angebotene Übertragungspreis unter einem vorgegebenen Grenzwert liegt.

9. Verfahren nach zumindest einem der Ansprüche 7 oder 8,
bei dem der angebotene Übertragungspreis mit Übertragungspreisen anderer Anbieter und/oder Kunden verglichen wird.

10. Verfahren nach zumindest einem der Ansprüche 7 bis 9,
bei dem der Übertragungspreis in Abhängigkeit von einem oder mehreren der Kriterien Übertragungsrate, Datenmenge, Übertragungsuhrzeit, Netzwerkauslastung und/oder Übertragungsweg einstellbar ist.

11. Programmprodukt für eine Datenverarbeitungsanlage, das Softwarecodeabschnitte enthält, mit denen ein Verfahren nach zumindest einem der Ansprüche 7 bis 10 auf einer Datenverarbeitungsanlage ausgeführt werden kann.
